# EUROPEAN PATENT SPECIFICATION

(11) **EP 3 124 101 B1**
(45) Date of publication and mention of the grant of the patent: **04.08.2021**
(21) Application number: 16174913.0
(22) Date of filing: 17.06.2016
(51) Int. Cl.: B01D 67/00, B01D 71/36

(54) **HYDROPHILIZING PTFE MEMBRANES**
HYDROPHILIERUNG VON PTFE-MEMBRANEN
HYDROPHILISATION DE MEMBRANES PTFE

(30) Priority: 31.07.2015 US 201514815072
(43) Date of publication of application: 01.02.2017
(73) Proprietor: Pall Corporation, Port Washington, NY 11050 (US)
(72) Inventor: SINGH, Amarnauth, Selden, NY 11784 (US); SITTERER, Andrew T., Massapequa, NY 11758 (US); JUPIO, Andrew D., Farmingdale, NY 11735 (US); GRZENIA, David L., Westbury, NY 11590 (US)
(74) Representative: Hoeger, Stellrecht & Partner Patentanwälte mbB

(56) References cited:
- EP-A1- 0 647 250
- EP-A1- 0 682 978
- EP-A1- 1 458 797
- CN-A- 103 212 315
- US-A1- 2006 051 647
- NADIA WALSBY ET AL: "Sulfonation of styrene-grafted poly(vinylidene fluoride) films", JOURNAL OF APPLIED POLYMER SCIENCE, vol. 81, no. 7, 15 August 2001 (2001-08-15), pages 1572-1580, XP055421573, US ISSN: 0021-8995, DOI: 10.1002/app.1587

## Description

### BACKGROUND OF THE INVENTION

PTFE membranes, particularly expanded PTFE (ePTFE) membranes, are used in a variety of liquid and gas filtration applications, including applications that involve treating challenging fluids such as corrosive or chemically active liquids. However, preparing porous membranes that can filter hot sulfuric perioxide mixture (SPM) fluids and/or exhibit metal scavenging or metal removal efficiency while providing low flow resistance can be a time consuming and/or labor intensive process.

These and other advantages of the present invention will be apparent from the description as set forth below.

US 2006/0051647 A1 relates to a polymer electrolyte membrane for a polymer electrolyte fuel cell, that overcomes the disadvantages of the conventional polymer ion-exchange membranes including fluorine-based polymer electrolyte membranes and can maintain cell characteristics even in use over a long period of time (e.g., several thousand hours). The polymer electrolyte membrane comprises a fluorine polymer substrate having grafted thereon monomers having sulfone groups as cation-exchange group, wherein a main chain of the graft chain comprises a hydrocarbon or a partially fluorinated hydrocarbon, and sulfone groups or substituents having sulfone groups are bonded as a side chain, and wherein in element compositional ratio by ESCA, at least one surface of the polymer electrolyte membrane has O/S value of 5.0 or higher, and a surface element proportion of S is 0.4-5.0%.

WO 94/28059 A discloses a porous PTFE, shaped articles prepared therefrom, and methods of preparing the same.

CN 103212315 A describes a method for the preparation of a graft modified PTFE microporous membrane with lasting hydrophilism. The method comprises the following steps of: firstly, preparing a dopamine water solution; regulating a pH value to be 7-10; putting the PTFE microporous membrane into ethanol and wetting to be transparent; soaking into the dopamine water solution at room temperature; preparing a modifying agent water solution by using a hydrophilic reagent as a modifying agent; regulating a pH value to be 7-10; soaking the PTFE microporous membrane subjected to treatment of the dopamine water solution into the modifying agent water solution; and taking out and drying to obtain the gas modified PTFE microporous membrane.

EP 0 682 978 A1 relates to a microporous membrane comprising a polytetrafluoroethylene microporous substrate, wherein the membrane has a critical wetting surface tension of at least about 70 dynes/cm (about 70 mN/m) after exposure to 170 °C for 3 minutes in air and after exposure to an aqueous 40% KOH solution for 10 days, and preferably also after exposure to an aqueous 30% H₂SO₄ solution and/or aqueous 30% HNO₃ solution for 10 days. The membrane preferably comprises a polytetrafluoroethylene microporous substrate and a crosslinked vinyl pyridine monomer which is bonded to the substrate. The reference also provides a method of preparing and using such a microporous membrane, as well as a filter element incorporating such a microporous membrane within a housing.

### BRIEF SUMMARY OF THE INVENTION

An embodiment of the invention provides a method of hydrophilizing a porous

PTFE membrane as set out in claim 1, the method comprising (a) exposing a porous PTFE membrane to an energy source selected from gas plasma and broadband UV, and preconditioning the membrane; and, (b) treating the preconditioned membrane to provide a hydrophilic coating; and, (c) obtaining a hydrophilized porous PTFE membrane.

### BRIEF DESCRIPTION OF THE SEVERAL VIEWS OF THE DRAWING(S)

Figure 1 is a graph showing metal absorption for an embodiment of a hydrophilized PTFE membrane according to the present invention, compared to an untreated PTFE membrane, and a commercially available UV treated PTFE membrane.
Figure 2 is a graph showing metal absorption for an embodiment of a hydrophilized PTFE membrane according to the present invention, compared to an untreated PTFE membrane, showing the absorption is due to the coating, rather than sieving.

### DETAILED DESCRIPTION OF THE INVENTION

In accordance with an embodiment of the present invention, a method of hydrophilizing a porous PTFE membrane is provided, the method comprising (a) exposing a porous PTFE membrane to an energy source selected from gas plasma and broadband UV, and preconditioning the membrane; and, (b) treating the preconditioned membrane to provide a hydrophilic coating; and, (c) obtaining a hydrophilized porous PTFE membrane.

Advantageously, in contrast with the preparation of membranes in accordance with conventional practice, membranes can now be prepared (i.e., wherein the membrane is preconditioned by exposure to an energy source before coating) wherein the reaction time is decreased by about 50%. Moreover, membranes can be prepared according to the invention in a manufacturing friendly process, e.g., the preparation can be easily incorporated into existing manufacturing processes, resulting in increased speed of preparation.

Without being bound by any particular theory, it is believed that preconditioning the membrane by exposure to the energy source allows the formation of radical and/or reactive sites on the native membrane surface, aiding in providing attractive forces for initiating the post chemical coating process, resulting in a hydrophilized surface.

The exposure to the energy source does not remove a significant amount of fluorine atoms from the surface of the membrane.

As used herein, "hydrophilizing" a porous PTFE membrane refers to increasing the critical wetting surface tension (CWST) such that the coated porous PTFE membrane has a CWST greater than that of a native, untreated, porous PTFE membrane. In some embodiments, the produced coated porous PTFE membrane is hydrophilic, having a CWST of 72 dynes/cm (72 x 10⁻⁵ N/cm), or more.

The porous membranes according the invention advantageously provide a combination of high metal scavenging or metal removal efficiency and low flow resistance, while remaining wet in the fluid being processed (i.e., the membranes are non-dewetting in the process fluid) and are useful in a wide range of liquid, and gas (including air) filtration applications, including sterile filtration applications. Exemplary applications include for example, diagnostic applications (including, for example, sample preparation and/or diagnostic lateral flow devices), ink jet applications, lithography, e.g., as replacement for HD/UHMW PE based media, filtering fluids for the pharmaceutical industry, metal removal, production of ultrapure water, treatment of industrial and surface waters, filtering fluids for medical applications (including for home and/or for patient use, e.g., intravenous applications, also including, for example, filtering biological fluids such as blood (e.g., virus removal)), filtering fluids for the electronics industry (e.g., filtering photoresist fluids in the microelectronics industry and hot sulfuric perioxide mixture (SPM) fluids), filtering fluids for the food and beverage industry, beer filtration, clarification, filtering antibody- and/or protein-containing fluids, filtering nucleic acid-containing fluids, cell detection (including *in situ*)*,* cell harvesting, and/or filtering cell culture fluids. Alternatively, or additionally, porous membranes according to embodiments of the invention can be used to filter air and/or gas and/or can be used for venting applications (e.g., allowing air and/or gas, but not liquid, to pass therethrough). Porous membranes according to embodiments of the inventions can be used in a variety of devices, including surgical devices and products, such as, for example, ophthalmic surgical products. The inventive membranes are dimensionally stable. In some embodiments, the porous PTFE membranes can be utilized individually, e.g., as unsupported membranes, and in other embodiments, the porous PTFE membranes can be combined with other porous elements and/or another component, to provide, for example, an article such as a composite, a filter element, and/or a filter.

Membranes according to embodiments of the invention are particularly suitable for filtering metal-containing fluids and/or SPM fluids.

For example, in one embodiment, a method for filtering a metal-containing fluid comprises passing a metal-containing fluid through an embodiment of the membrane, and removing metal from the fluid. The metal-containing fluid can be a fluid used in the electronics industry, and the method can include removing Group 2 metals (e.g., Mg and/or Ca), polyvalent metals and/or transition metals (e.g., Cr, Mo, Mn, Fe, and/or Ni) from the metal-containing fluid.

In another embodiment, a method for filtering a SPM fluid comprises passing the SPM fluid through an embodiment of the membrane, and removing particles (such as silica-containing particles) from the fluid. The method can also include removing metal from the SPM fluid. For example, an embodiment of the method can include removing Group 2 metals (e.g., Mg and/or Ca), polyvalent metals and/or transition metals from the metal-containing fluid.

With respect to broadband UV exposure, the UV radiation source (which may be coherent, or non-coherent) is capable of generating radiation having a broadband. For example, the broadband may comprise a distribution of wavelengths within a UV subband from about 100 nm to about 400 nm, e.g., a subband from about 150 nm to about 350 nm. Alternatively, the radiation source may be capable of generating narrower band radiation, e.g., radiation within a narrower subrange, such as, for example, about 100 nm to about 200 nm (Vacuum Ultraviolet), about 200 nm to about 280 nm (UVC), about 280 nm to about 315 nm (UVB), and/or about 315 nm to about 400 nm (UVA). The radiation source may also be capable of generating more discrete wavelengths of radiation.

Typically, the intensity (or the power density) of a Vacuum Ultraviolet (VUV) radiation source is in the range of from about 5 mW/cm² to about 100 mW/cm², preferably in the range of from about 5 mW/cm² to about 20 mW/cm², for a total treatment time period in the range of from about 1 minute to about 60 minutes, preferably, from about 5 minutes to about 20 minutes, even more preferably, from about 1 to about 5 minutes.

Typically, the intensity (or the power density) of the broadband radiation source, preferably, a medium pressure mercury lamp, is in the range of from about 10 mW/cm² to about 1000 mW/cm², preferably in the range of from about 10 mW/cm² to about 200 mW/cm², for a total treatment time period in the range of from about 5 seconds to about 300 seconds, more preferably, about 5 to about 120 seconds.

Typically, the intensity (or the power density) of the pulsed blackbody radiation source is in the range of from about 53,000 W/cm² to about 85,000 W/cm², for a total treatment time period in the range of from about 1 second to about 300 seconds, preferably in the range from about 1 second to about 120 seconds, even more preferably, in the range of from about 1 second to about 60 seconds.

The UV radiation source may be capable of emitting a continuous stream of radiation. A variety of suitable UV sources are commercially available, e.g., using electrode-containing bulbs, or electrodeless bulbs. Suitable sources include, for example, Fusion UV Systems, Inc. (Gaithersburg, MD) (e.g., excimer and mercury lamps), Pulsar Remediation Technologies, Inc. (Roseville, CA), UV Process Supply, Inc. (Chicago, IL), USHIO America, Inc. (Cypress, CA), M.D. Excimer, Inc. (Yokohama Kanagawa, Japan), Resonance Ltd. (Ontario, Canada) and Harada Corporation (Tokyo, Japan).

In some embodiments, the radiation source is capable of delivering pulses of radiation in short bursts. A pulsed radiation source is energy efficient and is capable of delivering high intensity radiation. For example, the radiation source can be capable of delivering pulsed, broadband, blackbody radiation, as described, for example, in U.S. Patent No. 5,789,755. Such pulsed, broadband, blackbody radiation assemblies are available from, for example, Pulsar Remediation Technologies, Inc.

Either, or both, surfaces of the membrane can be exposed to UV radiation in accordance with the invention.

Typically, the membrane to be exposed to UV radiation is placed in contact with at least one fluid, preferably a liquid (e.g., to impregnate the pores of the membrane with the liquid) before exposing the membrane to the UV radiation. If desired, the membrane can remain fully or partially immersed in the fluid during exposure to the radiation. Alternatively, for example, the membrane can be removed from the fluid before exposure to the radiation.

A variety of fluids are suitable for contacting the membrane before exposure to UV radiation. Suitable fluids include water (such as deionized water, and heavy water), alcohols, aromatic compounds, silicone oil, trichloroethylene, carbon tetrachloride, fluorocarbons (e.g., freon), phenols, organic acids, ethers, hydrogen peroxide, sodium sulfite, ammonium sulfate (e.g., t-butyl ammonium sulfate), ammonium sulfite, copper sulfate, boric acid, hydrochloric acid, and nitric acid. Typically, the liquid impregnating the pores of the membrane while the membrane is exposed to UV radiation absorbs in the range of generated wavelength of the UV radiation source.

In some embodiments, the membrane is contacted with a plurality of fluids before UV treatment. For example, the membrane can be immersed in a first fluid, e.g., an organic solvent (such as methanol, ethanol, acetone, ether, or isopropyl alcohol), preferably, wherein the first fluid has a high compatibility with water and a surface tension of about 30 dynes/cm or less, and the membrane can be immersed in a second fluid (e.g., water) to replace the solvent with water. Subsequently, the membrane can be immersed in a third fluid, e.g., comprising an aqueous solution or a non-aqueous solution, to replace the water with the aqueous compounds solution. The membrane impregnated with the third fluid is exposed to UV radiation.

With respect to gas plasma exposure, the term "gas plasma" is used generally to describe the state of an ionized gas. A gas plasma consists of high energy charged ions (positive or negative), negatively charged electrons, and neutral species. As known in the art, a gas plasma may be generated by combustion, flames, physical shock, or, preferably, by electrical discharge, such as a corona or glow discharge. In radio frequency (RF) discharge, a membrane or substrate to be treated is placed in a vacuum chamber and gas at low pressure is bled into the system. An electromagnetic field is generated by subjecting the gas to a capacitive or inductive RF electrical discharge. The gas absorbs energy from the electromagnetic field and ionizes, producing high energy particles. The gas plasma, as used in the context of the present invention, is exposed to the porous medium, thereby modifying the properties of the porous medium to provide the porous medium with characteristics not possessed by the untreated porous medium.

For plasma treatment of the porous PTFE, typically the gas plasma treatment apparatus is evacuated by attaching a vacuum nozzle to a vacuum pump. Gas from a gas source is bled into the evacuated apparatus through the gas inbleed until the desired gas pressure differential across the conduit is obtained. An RF electromagnetic field is generated in the plasma zone by applying current of the desired frequency to the electrodes from the RF generator. Ionization of the gas in the tube is induced by the field, and the resulting plasma in the tube modifies the medium in the plasma zone.

The gas used to treat the surface of the medium (membrane or substrate) may include inorganic and organic gases used alone or in combination. Inorganic gases are exemplified by helium, argon, nitrogen, neon, nitrous oxide, nitrogen dioxide, oxygen, air, ammonia, carbon monoxide, carbon dioxide, hydrogen, chlorine, hydrogen chloride, bromine cyanide, sulfur dioxide, hydrogen sulfide, xenon, krypton, and the like. Organic gases are exemplified by acetylene, pyridine, gases of organosilane compounds and organopolysiloxane compounds, fluorocarbon compounds and the like. In addition, the gas may be a vaporized organic material, such as an ethylenic monomer to be plasma polymerized or deposited on the surface of the membrane. These gases may be used either singly or as a mixture of two or more of such gases according to need. Typically, the gases can be nitrogen and/or methane with gas flow rate of about 15 to about 20 ml/min for plasma exposure times of about 30 to about 60 minutes. The gas can be combined as mixtures at various ratios.

The plasma source is capable of emitting Rf as a pulse or continuously. A variety of suitable commercially available units are suitable, including, for example, the PDC-001 surface plasma (bench top unit) from Harrick Plasma (Ithaca, NY).

The plasma source is preferably capable of generating 30W (Rf coil) in the range 10 -30 W supplied to the Rf coil. Typical parameters for the treatment of the porous PTFE membrane with a gas plasma can include power levels from about 10 to about 3000 watts, about 500 to about 2500 watts, about 1500 to about 2500 watts; RF frequency of about 1 kHz to about 100 MHz, about 15 kHz to about 60 MHz, about 30 kHz to about 50 kHz; exposure times of about 5 seconds to about 12 hours, about 1 minute to about 2 hours, about 10 to about 60 minutes; gas pressures of about 0.0013 to 133 mbar (about 0.001 to 100 torr), about 0.013 to 1.3 mbar (about 0.01 to 1 torr), and about to 0.13 to 6.67 mbar (about 0.1 to about 0.5 torr); and a gas flow rate of about 1-2000 standard cc/min.

A variety of PTFE membranes and substrates (including commercially available membranes and substrates) are suitable for use in the invention.

The membranes can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on the size of the particles to be utilized, the composition of the fluid to be treated, and the desired effluent level of the treated fluid.

Typically, the coated porous PTFE membranes according to the invention have a pore rating of about 1 micrometers or less, preferably (particularly for non-dewetting applications) in the range of from about .05 micrometers to about .02 micrometers, or less. For example, the membrane can be a nanoporous membrane, for example, a membrane having pores of diameter in the range of from 1 nm to 100 nm.

Typically, the coated membrane has a thickness in the range of from about 0.2 to about 5.0 mils (about 5 to about 127 microns), preferably, in the range of from about 0.5 to about 1.0 mils (about 13 to about 25 microns), though membranes can be thicker or thinner than those values.

The porous membrane can have any desired critical wetting surface tension (CWST, as defined in, for example, U.S. Patent 4,925,572). CWST can be measured by relying on a set of solutions of certain composition. Each solution has specific surface tension. The solution's surface tension ranges from 25 to 92 x 10-5 N/cm (25 to 92 dyne/cm) in small non-equivalent increments. To measure the membrane surface tension, the membrane is positioned on to top of white light table, one drop of a solution of certain surface tension is applied to the membrane surface and the time the drop takes to penetrate through the membrane and become bright white as an indication of light going through the membrane is recorded. Instant wetting is considered when the time the drop takes to penetrate the membrane is ≤ 10 seconds. If the time > 10 seconds, the solution is considered to partially wet the membrane. The CWST can be selected as is known in the art, e.g., as additionally disclosed in, for example, U.S. Patents 5,152,905, 5,443,743, 5,472,621, and 6,074,869.

Typically, the membrane has a CWST of at least about 27 dynes/cm (about 27 x 10⁻⁵ N/cm), more preferably, at least about 30 dynes/cm (about 30 x 10⁻⁵ N/cm), and in some embodiments, at least about 35 dynes/cm (about 35 x 10⁻⁵ N/cm). For example, the membrane may have a CWST in the range of from about 30 dynes/cm (about 30 x 10⁻⁵ N/cm) to about 40 dynes/cm (about 40 x 10⁻⁵ N/cm), or more.

An article such as a filter, filter element and/or composite including the porous membrane can include additional elements, layers, or components, that can have different structures and/or functions, e.g., at least one of any one or more of the following: prefiltration, support, drainage, spacing and cushioning. Illustratively, the filter can also include at least one additional element such as a mesh and/or a screen.

In accordance with embodiments of the invention, the membrane, filter element, composite and/or filter can have a variety of configurations, including planar, pleated, spiral, and/or hollow cylindrical.

The membrane, filter element, composite and/or filter is typically disposed in a housing comprising at least one inlet and at least one outlet and defining at least one fluid flow path between the inlet and the outlet, wherein the membrane is across the fluid flow path, to provide a filter device. Preferably, for crossflow applications, the membrane, composite and/or filter is disposed in a housing comprising at least one inlet and at least two outlets and defining at least a first fluid flow path between the inlet and the first outlet, and a second fluid flow path between the inlet and the second outlet, wherein the membrane is across the first fluid flow path, to provide a filter device. The filter device may be sterilizable. Any housing of suitable shape and providing at least one inlet and at least one outlet may be employed.

The housing can be fabricated from any suitable rigid impervious material, including any impervious thermoplastic material, which is compatible with the fluid being processed. For example, the housing can be fabricated from a metal, such as stainless steel, or from a polymer. In an embodiment, the housing is a polymer, such as an acrylic, polypropylene, polystyrene, or a polycarbonated resin.

The following examples further illustrate the invention but, of course, should not be construed as in any way limiting its scope.

### EXAMPLE 1

This example demonstrates a method of preparing membranes using gas plasma according to embodiments of the invention.

A commercially available PTFE membrane (Sumitomo Electric Fine Polymer, Inc., nominal pore size 50 nm) is gas plasma treated with argon/methane, at a gas flow rate of 15-20 ml/min, for 30 minutes.

The membranes are placed in isopropyl alcohol (IPA) for 30 seconds, and washed using deionized (DI) water for 1-2 minutes.

Membranes are placed in 10% solutions of either polystyrene sulfonic acid (PSSA) or styrene sulfonic acid (SSA) for 30 minutes at room temperature.

The membranes are washed using DI water for 16 hours, oven dried for 10 minutes at 65 °C, and the contact angles are measured using water.

The membranes are challenged with H₂SO₄ (exposed to H₂SO₄ for 12 hours at room temperature) and sulphuric perioxide mixture (SPM) solution for 16 hours at room temperature. Before each challenge, membranes are placed in IPA for 30 seconds, and washed using DI water for 1-2 minutes. After each challenge, the membranes are washed using DI water for 16 hours, oven dried for 10 minutes at 65 °C, and the contact angles are measured using water.

The results after H₂SO₄ treatment are as follows:

| Gas A/gas B | Grafting chemical | Contact angle (degrees) | Contact angle after H₂SO₄ |
|---|---|---|---|
| methane/argon | none | 87 | not tested |
| methane/argon | PSSA | <50 | 70 |
| methane/argon | SSA | <50 | 57 |
| methane/argon | PSSA | <50 | 59 |
| methane/argon | SSA | <50 | 60 |

The results after H₂SO₄ and SPM treatment are as follows:

| Gas A/gas B | Grafting chemical | Contact angle (degrees) | Contact angle after H₂SO₄ | After SPM |
|---|---|---|---|---|
| methane/argon | none | 87 | not tested | not tested |
| methane/argon | PSSA | <50 | 60 | 50-60 |

This example shows contact angle is stably decreased (and thus, CWST is stably increased and the membrane is non-dewetting), even after exposure to H₂SO₄, and SPM, in accordance with an embodiment of the invention.

### EXAMPLE 2 (Reference)

This example demonstrates a method of preparing membranes using broadband UV.

A dopamine solution is prepared as follows:
Tris-HCl buffer Preparation: To one liter DI-H₂O, mix 15 mmol of Tris-HCl buffer. pH ∼ 5. Add 1 N NaOH dropwise raising to pH 8.8. Store the buffer in a sealed container.
Dopamine Preparation (made fresh at time for coating): To a numbered 50 mL centrifuge tube with Tris buffer at pH = 8.8, add 0.1 g (2000 ppm) of Dopamine-Hydrochloride powder and then recap. Take note of actual dopamine mass added and reference it to the numbered centrifuge tube. As dopamine dissolves, a color change from clear to light orange will occur.

A commercially available PTFE membrane (Sumitomo Electric Fine Polymer, Inc., nominal pore size 50 nm) is prewet with IPA, immersed in DI water for 10-15 seconds to replace the IPA with DI water, and immersed in 0.15 M sodium sulfite (NaSO₄) for 10-15 seconds, to replace the DI water and impregnate the pores with sodium sulfite.

The membranes are exposed to broadband UV (power = 200 mW/cm²) at a speed of 20.3 cm/min (8 in/min) at 45 °C.

The control (native) and UV-treated membranes are coated as follows:
Polyethylene pipes are cut to 1 inch lengths and each membrane is placed over one opening in the pipe and affixed to the pipe by rubber bands to make a bowl, and placed in a dish. The dishes are placed on an orbital shaker which is operated at a low setting. 15 mL of freshly prepared 2000 ppm Dopamine in Tris-buffer solution is added to each membrane, and the timer is started..

A clear plastic cover is placed over each membrane to reduce evaporation. Membranes are removed from dishes at 15 minute intervals and placed in DI water wash trays for rinsing, minimum 30 minutes. Membranes are dried for 10 minutes at 50 °C.

After 4 hours, the broadband UV treated PTFE dopamine coated membranes have a CWST of over 90 mN/m (90 dynes/cm), whereas the native PFFE dopamine coated membranes have a CWST of 69-72 mN/m (68-72 dynes/cm). After 8 hours, the broadband UV treated PTFE dopamine coated membranes have a CWST of over 105 mN/m (105 dynes/cm), whereas the native PFFE dopamine coated membranes have a CWST of 82-84 mN/m (82-84 dynes/cm).

Thus, membranes prepared in accordance with an embodiment of the invention can be rendered hydrophilic in a shorter period as compared to coating native PTFE membranes.

### EXAMPLE 3

This example demonstrates a method of preparing membranes using broadband UV and thermal grafting according to an embodiment of the invention.

An initiator (for thermal grafting) is prepared as follows: Dissolve 1.5 g of AIBN in 100 ml water. (Solution A).

A grafting solution is prepared as follows: Dissolve 10.0 g of monomer 4-styrene sulphonic acid in 100 ml water (Solution B).

A commercially available PTFE membrane (Sumitomo Electric Fine Polymer, Inc., nominal pore size 50 nm) is prewet with IPA, immersed in DI water for 10-15 seconds to replace the IPA with DI water, and immersed in 0.1 M sodium sulfite for 10-15 seconds, to replace the DI water and impregnate the pores with sodium sulfite.

The membranes are exposed to broadband UV (power = 200 mW/cm²) at a speed of 20.3 cm/min (8 in/min) at 45 °C.

The control (native) and UV-treated membranes are coated as follows:
10x10 cm (4x4') pieces of BBUV treated - PTFE are placed in solution A (under nitrogen) for 1 hour at 80°C. 10x10 cm (4x4') pieces of initiator exposed media are placed in solution B (under nitrogen) at 80 °C for 3 hours.

The membranes are washed in DI water and subsequently IPA, dried, and analyzed.

The control membranes has CWSTs ranging from about 34 mN/m to about 38 mN/m (about 34 to about 38 dynes/cm), whereas the UV treated coated membranes have CWSTs ranging from 42-74 mN/m (42-74 dynes/cm).

The CWSTs of the control and UV treated membranes are not decreased after SPM challenge in static mode.

### EXAMPLE 4

This example demonstrates a method of preparing membranes using broadband UV and thermal grafting with other chemistries according to an embodiment of the invention.

An initiator is prepared, and PTFE membranes are prepared and exposed to broadband UV as described in Example 3.

Six grafting solutions are prepared: (1) d-PA (vinylidene-1 diphosphonic acid tetra isopropyl ester); (2) PEGMEMA (poly-ethylene glycol Methyl ether methacrylic acid); (3) p-SSA (4-polystryrene sulphonic acid); (4) CMS (4-chloromethyl styrene); (5) Ar-VB-t-MACl ((ary-vinyl benzene) trimethyl NH₄Cl); and (6) MA ((meth)acrylic acid). In preparing the solutions, 10.0 grams of each monomer are dissolved in 100 ml water (Solution B).

The control (native) and UV-treated membranes are coated as described in Example 3.

The control membrane (UV treatment only) has a CWST of about 65 mN/m (65 dynes/cm), and will not wet with aqueous solutions, whereas some of the UV treated coated membranes (PEGMEMA, p-SSA, Ar-VB-t-MACl, and MA) have of CWSTs of 72 mN/m (72 dynes/cm) or more and will wet with aqueous solutions (e.g., as used in life sciences applications).

### EXAMPLE 5 (Reference)

This example shows the metal removal efficiencies for hydrophilized membranes prepared according to an embodiment of the invention, compared to an untreated (control) PTFE membrane, and a commercially available UV treated PTFE membrane.

Dopamime coated membranes are prepared as described in Reference Example 2.

In one set of experiments, dopamine coated PTFE membranes prepared according to an embodiment of the invention, untreated PTFE membranes, and commercially available UV treated membranes, are used to filter fluid samples separately contain the following metals: Li, Na, K (Group 1 metals); Mg, Ca (Group 2 metals); Al, Pb (Group 3 metals), and Cr, Mo, Mn, Fe, Ni, Cu, Zn (Transition metals).

In another set of experiments, dopamine coated PTFE membranes prepared according to an embodiment of the invention, and untreated PTFE membranes, are used to filter fluid samples separately contain the following metals: Li, Na, K (Group 1 metals); Mg, Ca (Group 2 metals); Al, Pb (Group 3 metals), and Cr, Mo, Mn, Fe, Ni, Cu, Zn (Transition metals).

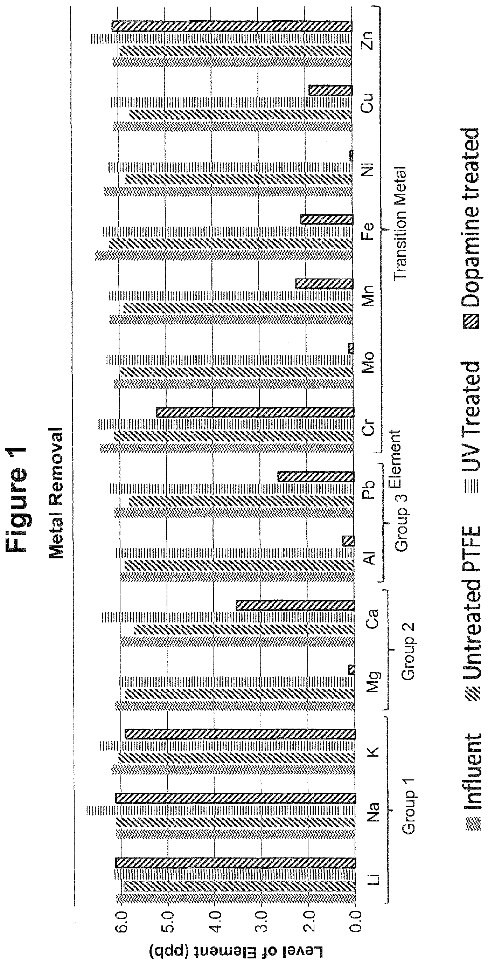

As shown in Figure 1, an embodiment of a membrane according to the invention, as compared to an untreated membrane and a commercially available UV treated membrane, efficiently removes various Group 2 and 3 metals, as well as various transition metals.

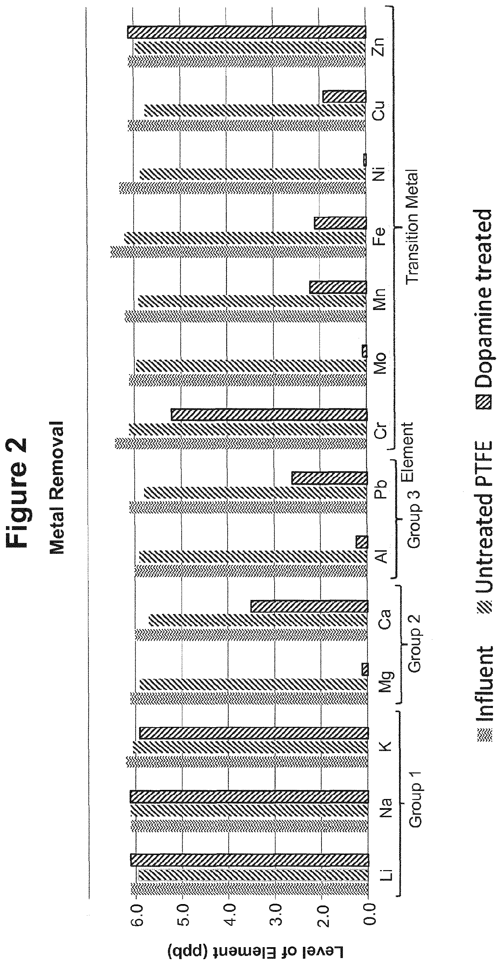

As shown in Figure 2, an embodiment of a membrane according to the invention, as compared to an untreated membrane, efficiently removes various Group 2 and 3 metals, as well as various transition metals.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A method of hydrophilizing a porous PTFE membrane, the method comprising
(a) exposing a porous PTFE membrane to an energy source selected from gas plasma and broadband UV, and preconditioning the membrane; and,
(b) thermally grafting the preconditioned membrane with a polystyrene sulfonic acid (PSSA) or styrene sulfonic acid (SSA) monomer solution, and thereby providing a hydrophilic PSSA or hydrophilic SSA polymer coating; and,
(c) obtaining a hydrophilized porous PTFE membrane having a CWST (Critical Wetting Surface Tension), defined according to US patent 4,925,572, greater than that of a native, untreated porous PTFE membrane.

2. The method of claim 1, wherein (a) comprises exposing the membrane to plasma for at least 15 minutes, or
wherein (a) comprises exposing the membrane to broadband UV while the pores of the membrane are impregnated with a liquid selected from the group consisting of water, alcohols, hydrogen peroxide, sodium sulfite, ammonium sulfite, ammonium sulfate, sodium aluminate, copper sulfate, boric acid, hydrochloric acid, and nitric acid.

3. The method of claim 1 or 2, including exposing the preconditioned membrane to an initiator before grafting.

4. The method of any one of claims 1 to 3, wherein the gas plasma includes a mixture of at least two gases.

5. The method of any one of claims 1 to 4, wherein the gas plasma includes an organic gas and/or an inorganic gas.

6. The method of any one of claims 1 to 5, further comprising washing the membrane after providing the hydrophilic coating, preferably wherein washing the membrane comprises isopropyl alcohol (IPA) washing.

7. The method of any one of claims 1 to 6, further comprising drying the hydrophilized PTFE membrane.

8. The method of any one of claims 1 to 7, wherein the hydrophilized porous PTFE membrane has a critical wetting surface tension (CWST) of at least 75 x 10⁻⁵N/cm (75 dynes/cm).

9. A hydrophilized porous PTFE membrane prepared by the method of any one of claims 1 to 8.

10. A method for filtering a metal-containing fluid, the method comprising passing a metal-containing fluid through the membrane of claim 9, and removing metal from the fluid.

11. The method of claim 10, wherein the metal-containing fluid is a fluid used in the electronics industry, and/or
the method comprising removing polyvalent metals and/or transition metals from the metal-containing fluid.

12. A method for filtering a Sulfuric Perioxide Mixture (SPM) fluid, the method comprising passing the SPM fluid through the membrane of claim 9, and removing particles from the fluid.

13. The method of claim 12 comprising also removing metal from the fluid.

## Patentansprüche

1. Verfahren zum Hydrophilieren einer porösen PTFE-Membran, wobei das Verfahren umfasst:
(a) Aussetzen einer porösen PTFE-Membran einer Energiequelle, welche ausgewählt ist aus Gasplasma und Breitband-UV, und Vorkonditionieren der Membran; und
(b) Thermopfropfen der vorkonditionierten Membran mit einer Polystyrolsulfonsäure-(PSSA-)Lösung oder einer Styrolsulfonsäure-(SSA-)Monomerlösung und dadurch Bereitstellen einer hydrophilen PSSA- oder einer hydrophilen SSA-Polymerbeschichtung; und
(c) Erhalten einer hydrophilierten porösen PTFE-Membran mit einem CWST-Wert (Wert der kritischen Oberflächenspannung der Benetzung), definiert nach US-Patent 4,925,572, der größer ist als der einer nativen unbehandelten porösen PTFE-Membran.

2. Verfahren nach Anspruch 1, wobei (a) umfasst: Aussetzen der Membran gegenüber Plasma für mindestens 15 Minuten oder
wobei (a) umfasst: Aussetzen der Membran gegenüber Breitband-UV, während die Poren der Membran mit einer Flüssigkeit getränkt sind, welche ausgewählt ist aus der Gruppe bestehend aus Wasser, Alkoholen, Wasserstoffperoxid, Natriumsulfit, Ammoniumsulfit, Ammoniumsulfat, Natriumaluminat, Kupfersulfat, Borsäure, Salzsäure und Salpetersäure.

3. Verfahren nach Anspruch 1 oder 2, umfassend: Aussetzen der vorkonditionierten Membran einem Initiator vor dem Pfropfen.

4. Verfahren nach einem der Ansprüche 1 bis 3, wobei das Gasplasma eine Mischung von mindestens zwei Gasen umfasst.

5. Verfahren nach einem der Ansprüche 1 bis 4, wobei das Gasplasma ein organisches Gas und/oder ein anorganisches Gas umfasst.

6. Verfahren nach einem der Ansprüche 1 bis 5, ferner umfassend: Waschen der Membran nach Bereitstellung der hydrophilen Beschichtung, wobei vorzugsweise das Waschen der Membran eine Isopropylalkohol-(IPA-)Waschung umfasst.

7. Verfahren nach einem der Ansprüche 1 bis 6, ferner umfassend: Trocknen der hydrophilierten PTFE-Membran.

8. Verfahren nach einem der Ansprüche 1 bis 7, wobei die hydrophilierte poröse PTFE-Membran eine kritische Oberflächenspannung der Benetzung (CWST) von mindestens 75 x 10⁻⁵ N/cm (75 dyn/cm) aufweist.

9. Hydrophilierte poröse PTFE-Membran, hergestellt nach dem Verfahren nach einem der Ansprüche 1 bis 8.

10. Verfahren zum Filtern eines metallhaltigen Fluids, wobei das Verfahren umfasst: Hindurchleiten eines metallhaltigen Fluids durch die Membran nach Anspruch 9 und Entfernen von Metall aus dem Fluid.

11. Verfahren nach Anspruch 10, wobei das metallhaltige Fluid ein Fluid ist, welches in der Elektronikindustrie verwendet wird, und/oder
wobei das Verfahren umfasst: Entfernen von mehrwertigen Metallen und/oder Übergangsmetallen aus dem metallhaltigen Fluid.

12. Verfahren zum Filtern eines Schwefelperoxid-Mischungs-(SPM-)Fluids, wobei das Verfahren umfasst: Hindurchleiten des SPM-Fluids durch die Membran nach Anspruch 9 und Entfernen von Partikeln aus dem Fluid.

13. Verfahren nach Anspruch 12, umfassend ferner ein Entfernen von Metall aus dem Fluid.

## Revendications

1. Procédé d'hydrophilisation d'une membrane de PTFE poreuse, le procédé comprenant
(a) l'exposition d'une membrane de PTFE poreuse à une source d'énergie choisie parmi un plasma gazeux et des UV à large bande, et le préconditionnement de la membrane ; et,
(b) le greffage thermique de la membrane préconditionnée avec une solution d'acide polystyrène sulfonique (PSSA) ou de monomère d'acide styrène sulfonique (SSA), et par-là la fourniture d'un revêtement de polymère de PSSA hydrophile ou SSA hydrophile ; et,
(c) l'obtention d'une membrane de PTFE poreuse hydrophilisée ayant une CWST (tension superficielle de mouillage critique), définie selon le brevet US 4 925 572, supérieure à celle d'une membrane de PTFE poreuse non traitée, native.

2. Procédé selon la revendication 1, dans lequel (a) comprend l'exposition de la membrane à un plasma pendant au moins 15 minutes, ou
dans lequel (a) comprend l'exposition de la membrane à des UV à large bande alors que les pores de la membrane sont imprégnés avec un liquide choisi dans le groupe consistant en eau, alcools, peroxyde d'hydrogène, sulfite de sodium, sulfite d'ammonium, sulfate d'ammonium, aluminate de sodium, sulfate de cuivre, acide borique, acide chlorhydrique, et acide nitrique.

3. Procédé selon la revendication 1 ou 2, incluant l'exposition de la membrane préconditionnée à un initiateur avant greffage.

4. Procédé selon l'une quelconque des revendications 1 à 3, dans lequel le plasma de gaz inclut un mélange d'au moins deux gaz.

5. Procédé selon l'une quelconque des revendications 1 à 4, dans lequel le plasma de gaz inclut un gaz organique et/ou un gaz inorganique.

6. Procédé selon l'une quelconque des revendications 1 à 5, comprenant de plus le lavage de la membrane après fourniture du revêtement hydrophile, de préférence dans lequel le lavage de la membrane comprend un lavage à l'alcool isopropylique (IPA).

7. Procédé selon l'une quelconque des revendications 1 à 6, comprenant de plus le séchage de la membrane de PTFE hydrophilisée.

8. Procédé selon l'une quelconque des revendications 1 à 7, dans lequel la membrane de PTFE poreuse hydrophilisée présente une tension superficielle de mouillage critique (CWST) d'au moins 75 x 10⁻⁵ N/cm (75 dynes/cm).

9. Membrane de PTFE poreuse hydrophilisée préparée par le procédé selon l'une quelconque des revendications 1 à 8.

10. Procédé pour la filtration d'un fluide contenant du métal, le procédé comprenant le passage d'un fluide contenant du métal à travers la membrane de la revendication 9, et l'élimination du métal à partir du fluide.

11. Procédé selon la revendication 10, dans lequel le fluide contenant du métal est un fluide utilisé dans l'industrie électronique, et/ou le procédé comprenant l'élimination de métaux polyvalents et/ou métaux de transition du fluide contenant du métal.

12. Procédé pour la filtration d'un fluide de mélange de peroxyde sulfurique (SPM), le procédé comprenant le passage du fluide SPM à travers la membrane de la revendication 9, et l'élimination de particules à partir du fluide.

13. Procédé selon la revendication 12 comprenant également l'élimination de métal à partir du fluide.
